**Europäisches Patentamt**

**European Patent Office**

**Office européen des brevets**

(19)

(11) Veröffentlichungsnummer: **0 312 592 B1**

(12)

# EUROPÄISCHE PATENTSCHRIFT

(45) Veröffentlichungstag der Patentschrift:
30.10.91 Patentblatt 91/44

(51) Int. Cl.$^5$: **G01B 7/00**

(21) Anmeldenummer: **88905188.4**

(22) Anmeldetag: **02.05.88**

(86) Internationale Anmeldenummer:
**PCT/EP88/00477**

(87) Internationale Veröffentlichungsnummer:
**WO 88/08956 17.11.88 Gazette 88/25**

(54) **VORRICHTUNG ZUM MESSEN DER TIEFE DER ZAHNFLEISCHTASCHEN BEI PARODONTOPATHIE.**

(30) Priorität: **02.05.87 DE 3714739**

(43) Veröffentlichungstag der Anmeldung:
**26.04.89 Patentblatt 89/17**

(45) Bekanntmachung des Hinweises auf die
Patenterteilung:
**30.10.91 Patentblatt 91/44**

(84) Benannte Vertragsstaaten:
**AT BE CH DE FR GB IT LI NL SE**

(56) Entgegenhaltungen:
**WO-A-84/03143**
**WO-A-86/05382**
**DE-A- 3 411 366**
**US-A- 3 943 914**

(73) Patentinhaber: **Gründler, Patrik Dr. med.**
**Iddastrasse 7**
**CH-9008 St. Gallen (CH)**

(72) Erfinder: **Gründler, Patrik Dr. med.**
**Iddastrasse 7**
**CH-9008 St. Gallen (CH)**

(74) Vertreter: **Patentanwälte Dipl.-Ing. E. Eisele**
**Dr.-Ing. H. Otten**
**Seestrasse 42**
**W-7980 Ravensburg (DE)**

## Beschreibung

Die Erfindung betrifft eine Vorrichtung zum Messen der Tiefe der Zahnfleischtaschen, insbesondere zur Erstellung eines Parodontopathie-Befunds, mit einer in die Zahnfleischtasche einzuführenden stabförmigen Sonde, wobei durch Sensierung des auf die Sonde auftreffenden Lichts die Länge des durch das Zahnfleisch abgeschatteten Abschnitts der Sonde ermittelt und in einer angeschlossenen elektronischen Auswerteinrichtung registriert wird.

In der Zahnheilkunde erlangen prophylaktische Maßnahmen immer größere Bedeutung. Ausgangspunkt sind regelmäßige Untersuchungen der parodontalen Situation und genaue Aufzeichnungen darüber, so daß der Krankheitsverlauf bzw. der Behandlungserfolg überprüft werden kann. Durch Entzündungen des Zahnhalteapparats kommt es zu einem Ablösen des Zahnfleisches vom Zahnhals, wodurch sich mehrere Millimeter tiefe Zahnfleischtaschen bilden, in denen sich Zahnstein und Konkremente ansammeln und den Nährboden für zahlreiche Krankheitserreger bilden. Die Tiefe dieser Zahnfleischtasche, d. h. der Abstand zwischen dem Zahnfleischsaum und der Obergrenze der Zone, in der das Zahnfleisch fest angewachsen ist, bildet ein wesentliches zahnärztliches Kriterium.

Eine bekannte Vorrichtung der einleitend bezeichneten Art beschreibt die DE-A 34 11 366. Die Sonde ist hiernach auf ihrer gesamten Länge in gleichen Abständen mit lichtempfangenden Elementen besetzt, die durch den Sondenhals und den Handgriff hindurch mit einer elektronischen Auswerteschaltung verbunden sind. Nach dem Einführen der Sonde werden die Meßpunkte der Reihe nach abgegriffen, wobei sich im Bereich des Zahnfleischsaumes eine Änderung des Meßwerts gegenüber den in der Reihe vorhergehenden Meßwerten ergibt. Ganz abgesehen von den hohen Kosten ist es schwierig, so viele lichtempfangende Elemente auf der Sonde unterzubringen, wie zur Erreichung der erforderlichen Auflösung nötig sind. Ferner erfordern die vielen lichtempfindlichen Elemente und ihre Verbindungsleitungen zwischen den Meßelementen und der Auswerteschaltung einen unerwünscht großen Durchmesser der Sonde selbst, insbesondere des Sondenhalses, und des Kabels.

Ferner sind Meßsonden bekannt, die ein dünnes Sondenelement aufweisen, das sich in einem Mantelröhrchen verschieben läßt, z. B. aus der WO 86/05382. In diesem speziellen Fall ist das Sondenelement als flexibles Glasfaserbündel ausgebildet. Dabei wird die Länge des aus dem Mantelröhrchen hervorstehenden Abschnitts des Sondenelements gemessen. Mittels einer Federanordnung o. dgl. wird das Sondenelement in eine Endstellung aus dem Röhrchen herausgetrieben. Infolge der von der Spitze des Sondenelements auf den Grund der Zahnfleischtasche ausgeübten Kraft kommt es zwangsläufig zu Verletzungen des empfindlichen Gewebes mit Austritt von Blut, wodurch das Meßergebnis verfälscht wird. Die Meßgenauigkeit hängt nämlich entscheidend davon ab, ob es gelingt, den Stirnrand des Mantelröhrchens zur Messung genau in Höhe des Zahnfleischsaumes zu plazieren, was schwierig ist und höchste Konzentration erfordert. Außerdem erschwert das unvermeidliche Eindringen von Körperflüssigkeit in das Mantelröhrchen durch Kapillarwirkung die freie Bewegung des Sensorelements und wirft Reinigungsprobleme auf.

Der Erfindung liegt die Aufgabe zugrunde, eine einfache Meßvorrichtung für die Zahnfleischtaschentiefe vorzuschlagen, die eine bequeme Handhabung und eine hohe Meßgenauigkeit in sich vereint und eine schnelle Aufnahme der Befunde sowie deren selbsttätige datenmäßige Weiterverarbeitung ermöglicht.

Diese Aufgabe wird erfindungsgemäß dadurch gelöst, daß die Sonde als lichtdurchlässige Kanüle ausgebildet ist, in deren geschlossenem Innenraum ein lichtempfindliches Sensorelement längsbeweglich angeordnet ist.

Es ist also nur noch ein einziges lichtempfindliches Sensorelement mit einem verhältnismäßig einfachen Bewegungs- und Längenmeßapparat erforderlich. Die Zuleitung ist unproblematisch. Ein wesentlicher Vorteil besteht darin, daß das Sensorelement selbst durch die geschlossene Kanüle gegen Verschmutzung und jegliche chemische Aggression geschützt ist.

Die erfindungsgemäße Sonde ist in an sich bekannter Weise an einem Handgriff angebracht. In dem Handgriff, der über ein flexibles Kabel mit einem Auswertegeräte verbunden ist, sind zumindest ein Teil der erforderlichen Schaltelemente oder sonstigen Bauteile, die für die Messung erforderlich sind, enthalten. Insbesondere ist an dem Handgriff ein Betätigungsorgan angebracht, um nach dem Einstecken der Sonde in die Zahnfleischtasche den selbsttätigen Meß- und Speichervorgang auszulösen. Das Betätigungsorgan kann die Form eines Druckknopfes, Schiebers o. dgl. haben.

Um zu gewährleisten, daß bei Beginn der Messung die Sonde immer mit gleicher Kraft auf den Boden der Zahnfleischtasche aufgedrückt wird, kann es zweckmäßig sein, im Handgriff oder am Hals der Sonde einen elektrischen Kontaktgeber so anzuordnen, daß er bei Ausübung einer bestimmten Mindestdruckkraft den Meß- und Speichervorgang auslöst und dies beispielsweise durch ein akustisches Signal anzeigt.

Die außerhalb der Zahnfleischtasche befindlichen Stellen der Sonde empfangen durch die Beleuchtung der Mundhöhle helles Licht. Im Bereich des Zahnfleischsaums kommt immer weniger Streulicht auf die weiter

2

innen liegenden Punkte und im Innern der Tasche ist die Sonde voll abgeschattet. Trägt man die Lichtmeßwerte über der Sondenlänge grafisch auf, so ergibt sich aus den einzelnen Lichtmeßpunkten eine Kurve, die mit einer mehr oder weniger konstanten beleuchtungsstärke beginnt und dann im Bereich des Zahnfleischsaums auf einen wesentlich niedrigeren Beleuchtungswert abfällt. Ein Grundgedanke der Erfindung besteht darin, diese örtliche Veränderung des Beleuchtungswerts entlang der Sonde elektronisch zu erfassen und auf diese Weise den Zahnfleischsaum örtlich zu identifizieren, denn er befindet sich dort, wo sich der Übergang von hohen zu niedrigen Lichtmeßwerten vollzieht. Vorausgesetzt, daß die Sondenspitze am Grunde der Zahnfleischtasche aufsitzt, läßt sich somit die Taschentiefe erfassen.

Eine Besonderheit der Erfindung besteht darin, daß die Lichtmeßwerte der einzelnen Punkte nicht gleichzeitig, sondern zeitlich nacheinander zur Verfügung stehen. Die einzelnen Meßpunkte werden von dem einzigen Sensorelement abgefahren.

Um eine Kanüle mit möglichst kleinem Querschnitt verwenden zu können, muß auch das Sensorelement möglichst klein sein. In Betracht kommt eine miniaturisierte lichtempfindliche Diode, die an der Spitze einer dünnen Faser oder dgl. befestigt ist. In Fortbildung dieses Gedankens wird vorgeschlagen, daß das Sensorelement durch das freie Ende eines Lichtleiters gebildet ist, der mit dem anderen Ende an einem lichtempfindlichen, möglicherweise im Handgriff befestigten Sensor angeschlossen ist. Der bewegliche Endabschnitt des flexiblen Lichtleiters ragt in die Kanüle hinein. Dabei braucht die lichtdurchlässige Kanüle nur so dick zu sein, daß sich der Lichtleiter darin verschieben läßt. Gemessen wird die Beleuchtungsstärke am freien Ende des Lichtleiters. Das Licht wird zum eigentlichen Sensor hin übertragen.

Hinsichtlich der leichteren Zuordnung der jeweiligen Lichtmeßwerte zu den einzelnen Meßpunkten ist es vorteilhaft, die Kanüle nicht auf voller Länge lichtdurchlässig zu machen, sondern nur in bestimmten Abschnitten. Wenn die so gebildeten Fenster in Längsrichtung untereinander gleiche Abstände haben, kann der einzelne Meßpunkt durch Abzählen der bei der Bewegung des Sensorelements entstehenden Meßimpulse örtlich identifiziert werden.

Eine andere Weiterbildung der Erfindung besteht darin, daß das Sensorelement mit einer konstanten Geschwindigkeit bewegt wird, vorzugsweise in Verbindung mit einer auf ganzer Länge lichtdurchlässigen Kanüle. Dadurch entsteht ein sich zeitlich stufenlos änderndes Lichtmeßsignal, das mit analogtechnischen Mitteln weiterverarbeitet werden kann. Insbesondere wird vorgeschlagen, daß dieses Lichtmeßsignal mittels eines elektronischen Differenziergliedes nach der Zeit differenziert wird. Somit liegt der Zahnfleischsaum dort, wo eine bestimmte Mindest-Änderungsgeschwindigkeit des Lichtmeßsignals auftritt. Die konstante Geschwindigkeit der Sensorelementbewegung schafft außerdem die Möglichkeit, durch Erfassung des Zeitablaufs seit Beginn der Bewegung den Ort des jeweiligen Meßpunkts zu identifizieren.

Der Vorgang des Messens der Zahnfleischtaschentiefe ist damit individueller Beurteilung und Einwirkung weitgehend entzogen, was die Reproduzierbarkeit der Meßergebnisse begünstigt. Ohne daß eine Helferin erforderlich ist, wird die Befundaufnahme erheblich beschleunigt, da die elektronisch erfaßten Meßdaten unmittelbar gespeichert werden.

Die richtige Zuordnung der Tiefenmeßdaten zu den Meßstellen am Gebiß kann entweder dadurch erfolgen, daß die Messungen stets in einer streng vorgegebenen Reihenfolge durchgeführt werden, wobei dann für die fehlenden Meßstellen, beispielsweise infolge fehlender Zähne, ein Leersignal gegeben werden muß. Es ist aber auch möglich, daß der Zahnarzt über eine für ihn leicht zugängliche Tastatur jeweils vor oder nach der Messung den Meßort eingibt. Für die Aufzeichnung, Wiedergabe und Auswertung der Meßdaten stehen alle Möglichkeiten der modernen Datenverarbeitung zur Verfügung.

Normalerweise kann eine homogene Beleuchtung in der Mundhöhle und somit entlang der Sonde vorausgesetzt werden, so daß die Abschattung eines bestimmten Bruchteils der Sondenlänge erkennbar ist. Andererseits kann durch eine zusätzliche Lichtquelle, die z. B. am Handgriff der Sonde angebracht sein könnte, ein homogener Lichteinfall auf den Zahn und die Zahnfleischtaschenaußenseite herbeigeführt werden. Dabei läßt sich die Wellenlänge des verwendeten Lichts den optischen Eigenschaften des Sondenwerkstoffs und/oder des Gewebes (Blutes) anpassen.

Ausführungsbeispiele der Erfindung werden nachfolgend anhand der Zeichnung erläutert. Im einzelnen zeigt:

Fig. 1 einen Querschnitt des Zahnhalteapparats und die Seitenansicht einer Sonde,

Fig. 2 die schematische Schnittdarstellung einer Sonde mit einem beweglichen Lichtleiter als Meßspitze,

Fig. 3 eine graphische Darstellung von Meßwerten, aufgetragen über der Sondenlänge,

Fig. 4 eine schematische Draufsicht auf ein Gebiß,

Fig. 5 eine tabellarische Darstellung der Meßwerte,

Fig. 6 eine andere Ausführungsform einer Sonde mit bewegter Fotodiode als Meßspitze,

Fig. 7 ein Blockschaltbild für die Auswertung der Signale von mit gleichförmiger Geschwindigkeit bewegten Sensoren und

Fig. 8 die Ansicht eines Teils eines anderen Röhrchens.

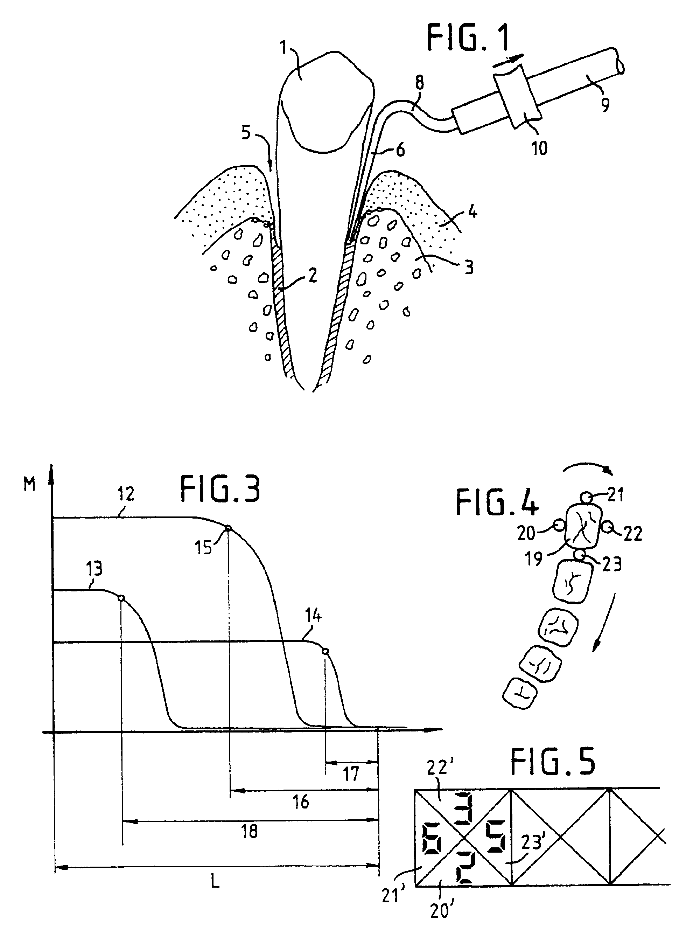

In Fig. 1 ist ein Zahn 1 mit Wurzelhaut 2 dargestellt, wobei der Kieferknochen mit 3 und das Zahnfleisch mit 4 bezeichnet ist. Infolge von Zahnfleischerkrankung ist das Zahnfleisch oben ein Stück weit vom Zahn abgelöst und der Kieferknochen zeigt eine beginnende Zerstörung, wodurch sich Taschen 5 gebildet haben. Die Tiefe dieser Taschen wird mit Hilfe einer Sonde 6 gemessen, die mittels eines geschwungenen Halses 8 an einem Handgriff 9 angebracht ist. Dieser hat einen verschiebbaren Ring 10, der als Tastschalter zur Auslösung des Meßvorgangs dient.

Fig. 2 zeigt ein Beispiel einer ähnlichen Sonde aus einem Röhrchen 30 aus Glas oder einem anderen lichtdurchlässigen Werkstoff, das unten geschlossen ist und mittels eines daran angebrachten Handgriffs 31 gehalten wird. In dem Handgriff befindet sich eine längsverschiebbar gelagerte lichtempfindliche Zelle, z. B. Fotodiode 32, die mittels eines durch einen Doppelpfeil 33 angedeuteten Antriebes über einen Hubbereich von etwa 1 cm Länge bewegt werden kann. Die Fotodiode ist über eine dünne flexible Leitung 34 mit weiteren in dem Handgriff 31 eingebauten Bauteilen und letztlich über ein stärkeres flexibles Kabel mit einer Auswerteeinrichtung verbunden. An der lichtempfindlichen Seite der Fotodiode 32 ist ein Lichtleiter 35 in Gestalt einer Glasfaser oder eines feinen Glasfaserbündels angebracht. Dieser Lichtleiter ragt mit seinem Endabschnitt in das Röhrchen 30 hinein, so daß bei einer Bewegung der Fotodiode 32 der Abschnitt des Lichtleiters 35, der sich im Röhrchen 30 befindet, dort eine entsprechende Bewegung macht. In seiner unteren Endstellung erreicht das Lichtleiterende 35a dabei nahezu das geschlossene untere Ende des Röhrchens. Die Flexibilität des Lichtleiters ermöglicht die Umlenkung in dem gebogenen oberen Teil des Röhrchens 30. Der Sensor 32 mißt jeweils die Beleuchtung, die am Lichtleiterende 35a vorherrscht.

Das Prinzip der Auswertung zeigt Fig. 3. Über der Länge L des Röhrchens 30 sind die jeweiligen Meßwerte M der Fotodiode 32 von drei verschiedenen Messungen in Form von drei Kurven 12, 13 und 14 aufgetragen. Dabei sind die einzelnen Meßpunkte zu einem linienförmigen Kurvenzug miteinander verbunden. Die Kurve 12 gibt die Messung einer Zahnfleischtasche mittlerer Tiefe wieder. Die Meßpunkte auf dem außerhalb der Zahnfleischtasche befindlichen Längenabschnitt des Röhrchens 30 sind voll beleuchtet und ergeben daher verhältnismäßig hohe und untereinander praktisch gleiche Meßwerte. Im Bereich des Zahnfleischsaums beginnt die Abschattung. Die Meßwerte sinken daher ab und haben, soweit der Lichtleiter 35 in die Tasche eingetaucht ist, nur noch vernachlässigbar kleine Werte. Ein Diskriminator stellt den Knickpunkt 15 der Kurve fest und zeigt die Längendifferenz zwischen dem geschlossenen Ende des Röhrchens 30 und dem Lichtleiterende 35a an. Dieser der Taschentiefe entsprechende Längenwert ist mit 16 bezeichnet.

Bei dem Meßvorgang, dem die Kurve 14 entspricht, war die Sonde wesentlich schwächer beleuchtet. Die Meßwerte außerhalb der Zahnfleischtasche sind deshalb wesentlich kleiner als bei der Kurve 12. Ungeachtet dessen ist jedoch das typische Absinken der Meßwerte in dem Bereich erkennbar, wo das Zahnfleisch die Sonde zunehmend abschattet. Der Computer erfaßt den Knickpunkt und zeigt die hier wesentlich geringere Taschentiefe 17 an. Bei der dritten Messung, entsprechend der Kurve 13, liegt wieder eine stärkere Beleuchtung vor. Der beschattete Längenbereich 18 ist der Größte von allen drei Messungen, d. h. diese Zahnfleischtasche ist besonders tief.

Die Darstellung in Fig. 4 will zeigen, daß an einem Backenzahn 19 an vier, durch kleine Kreise 20, 21, 22, 23 angedeuteten Stellen des Zahnumfangs Messungen der Zahnfleischtaschentiefe vorgenommen worden sind. Die Tiefen betragen 2, 6, 3 und 5 Millimeter. Diese Meßergebnisse werden vom Computer abgespeichert und in einer formularmäßigen Anordnung gemäß Fig. 5 wiedergegeben. Hierbei entsprechen die dreieckigen Felder 20', 21', 22', 23' den Meßstellen 20, 21, 22, 23. Um eine topographisch richtige Wiedergabe zu erreichen, ist festgelegt, daß man bei der Untersuchung mit dem letzten Zahn einer ebenfalls festgelegten Kieferhälfte beginnt und bei fehlenden Zähnen ein entsprechendes Leersignal gibt.

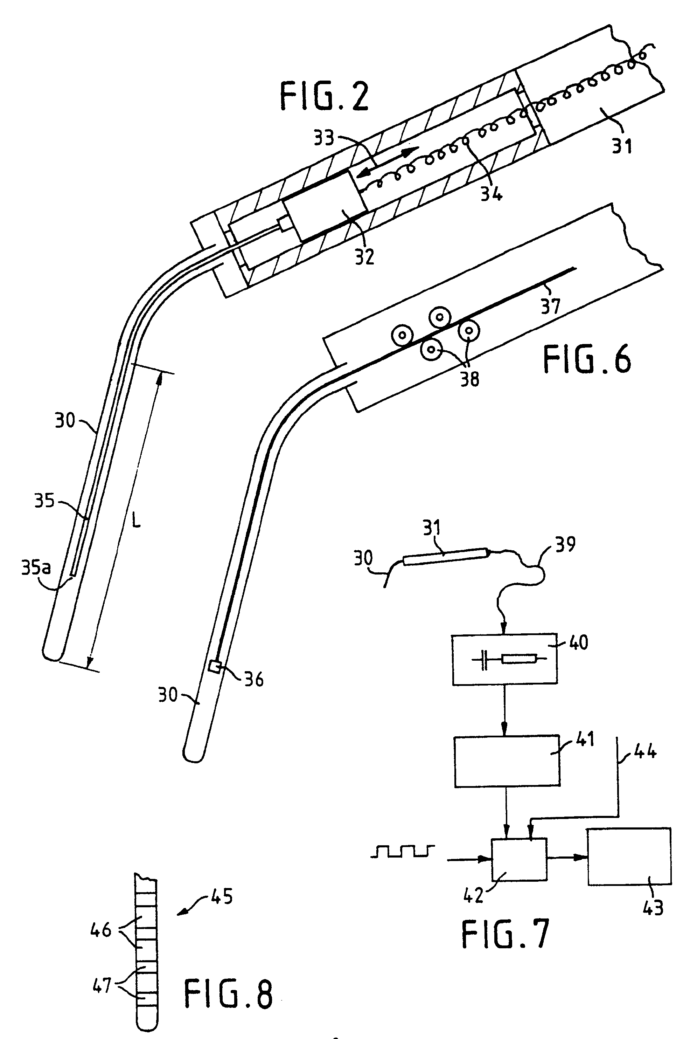

Bei dem Ausführungsbeispiel einer Sonde nach Fig. 6 ist wiederum ein Glasröhrchen 30 mit Handgriff vorgesehen. Anstelle des Lichtleiters ist hier jedoch eine extrem miniaturisierte Fotodiode 36 o. dgl. unmittelbar in dem Glasröhrchen 30 beweglich untergebracht und von einer flexiblen Faser 37, z. B. einem feinen Draht oder Kabel getragen. Mit Hilfe von vier Reibrollen 38, die im Handgriff untergebracht und genau steuerbar angetrieben sind, wird die Faser 37 und die lichtempfindliche Zelle 36 in dem Röhrchen 30 bewegt. Der bewegliche Lichtempfänger 36 steht mit elektrischen Leitungen, die in der Faser 37 geführt sein können, in Verbindung.

Fig. 7 zeigt schematisch, wie die Meßsignale der Dioden nach Fig. 2 oder Fig. 6 bei gleichförmiger Bewegung von einem Ende des Hubweges zum anderen ausgewertet werden können. Über das Kabel 39 des Handgriffs 31 gelangen die Signale, ggf. nach entsprechender Verstärkung, auf ein Differenzierglied 40. Mittels einer Schaltschwelle 41 wird aus dem differenzierten Signal ein Schaltsignal gewonnen, welches ein Tor 42 öffnet. Durch dieses Tor gelangen gleichfrequente Zählimpulse auf einen Zähler 43. Am Ende des Hubweges wird über ein von der Antriebsvorrichtung ausgesandtes Abschaltsignal 44 das Tor 42 wieder geschlossen. Der Stand des Zählers 43 nach Abschluß des Meßzyklus entspricht bei diesem einfachen Beispiel der Tiefe der Zahnfleischtasche oder, je nach der Bewegungsrichtung des Lichtleiterendes 35a oder der Diode 36, der Differenz zwischen der Hublänge L und der Taschentiefe.

In Fig. 8 ist ein anderes Röhrchen 45 angedeutet, das nicht auf ganzer Länge lichtdurchlässig ist, sondern im Wechsel mit lichtundurchlässigen Abschnitten 46 lichtdurchlässige Abschnitte 47, zum Beispiel ringförmige Fenster, aufweist. Hierdurch kann auch bei ungleichförmiger Bewegung der Diode bzw. des Lichtleiters durch Abzählen der beim Durchlauf an den Fenstern auftretenden Lichtimpulse der jeweilige Meßpunkt identifiziert werden.

| 1 | Zahn | 30 | Röhrchen |
|---|------|----|----------|
| 2 | Wurzelhaut | 31 | Handgriff |
| 3 | Kieferknochen | 32 | Fotodiode |
| 4 | Zahnfleisch | 33 | Antrieb |
| 5 | Tasche | 34 | Leitung |
| 6 | Sonde | 35 | Lichtleiter |
| 8 | Hals | 35a | Lichtleiterende |
| 9 | Handgriff | 36 | Fotodiode |
| 10 | Ring | 37 | Faser |
| 12 | Kurve | 38 | Reibrollen |
| 13 | Kurve | 39 | Kabel |
| 14 | Kurve | 40 | Differenzierglied |
| 15 | Knickpunkt | 41 | Schaltschwelle |
| 16 | Längenwert | 42 | Tor |
| 17 | Längenwert | 43 | Zähler |
| 18 | Längenwert | 44 | Abschaltsignal |
| 19 | Backenzahn | 45 | Röhrchen |
| 20 | Meßstelle | 46 | lichtundurchlässiger Abschnitt |
| 20' | Meßstelle | | |
| 21 | Meßstelle | 47 | Ringfenster |
| 21' | Meßstelle | | |
| 22 | Meßstelle | | |
| 22' | Meßstelle | L | Sondenlänge |
| 23 | Meßstelle | M | Meßwert |
| 23' | Meßstelle | | |

## Patentansprüche

1. Vorrichtung zum Messen der Tiefe der Zahnfleischtaschen, insbesondere zur Erstellung eines Parodontopathie-Befunds, mit einer in die Zahnfleischtasche einzuführenden stabförmigen Sonde, wobei durch Sensierung des auf die Sonde auftreffenden Lichts die Länge des durch das Zahnfleisch abgeschatteten Abschnitts der Sonde ermittelt und in einer angeschlossenen elektronischen Auswerteinrichtung registriert wird, dadurch gekennzeichnet, daß die Sonde als lichtdurchlässige Kanüle (30) ausgebildet ist, in deren geschlossenem Innenraum ein lichtempfindliches Sensorelement (35; 36) längsbeweglich angeordnet ist.

2. Vorrichtung nach Anspruch 1, dadurch gekennzeichnet, daß das Sensorelement durch das freie Ende (35a) eines Lichtleiters (35) gebildet ist, der mit dem anderen Ende an einem lichtempfindlichen Sensor (32) angeschlossen ist, wobei der freie Endabschnitt in die Kanüle (30) hineinragt.

3. Vorrichtung nach Anspruch 1, dadurch gekennzeichnet, daß die Kanüle (45) in bestimmten Abschnitten (46) ihrer Länge lichtundurchlässig ist.

4. Vorrichtung nach Anspruch 1, dadurch gekennzeichnet, daß eine Antriebsvorrichtung (33) zur Bewegung des Sensorelements (35; 36) vorgesehen ist, welche dessen Stellung jederzeit meßtechnisch zu erfassen gestattet.

5. Vorrichtung nach Anspruch 4, dadurch gekennzeichnet, daß das Sensorelement (35; 36) sich mit einer konstanten Geschwindigkeit bewegt.

6. Vorrichtung nach Anspruch 5, gekennzeichnet durch, ein elektronisches Differenzierglied (40) zum zeitlichen differenzieren des Lichtmeßsignals, das sich im Verlauf der Bewegung des Sensorelements in die Zahnfleischtasche hinein oder aus dieser heraus zeitlich ändert.

7. Vorrichtung nach Anspruch 1, dadurch gekennzeichnet, daß die Sonde einen Handgriff (9; 31) aufweist und an diesem ein Betätigungsorgan (10) zum Auslösen des Meß- und Speichervorgangs angebracht ist.

8. Vorrichtung nach einem der vorhergehenden Ansprüche, dadurch gekennzeichnet, daß eine zusätzliche Lichtquelle zur Beleuchtung des Zahns und der in die Zahnfleischtasche eingesteckten Sonde vorgesehen ist.

9. Vorrichtung nach Anspruch 8, dadurch gekennzeichnet, daß das Licht der Lichtquelle eine auf das Absorptionsverhalten der Sonde und/oder des Gewebes (Blutes) abgestimmte Wellenlänge hat.

## Claims

1. Device for measuring the depth of the gingival pockets, particularly for generating a periodontic pathosis report, comprising a rod-shaped probe adapted to be inserted into the gingival pocket, wherein the length of the probe section being shadowed by the gums is measured by detection of the light striking the probe and recorded in an electronic analysing device connected to the probe, characterized in that a probe in the form of a transparent cannula (30) is provided in the closed interior space of which a light-sensitive sensor element (35; 36) is arranged to be longitudinally movable.

2. Device as claimed in claim 1, characterized in that the sensor element is formed by the free end (35a) of an optical wave guide (35) which is connected with the other end to a light-sensitive sensor (32), the free end section protruding into the cannula (30).

3. Device as claimed in claim 1, characterized in that the cannula (45) is opaque in certain sections (46) of its length.

4. Device as claimed in claim 1, characterized in that a drive device (33) for moving the sensor element (35; 36) is provided which allows its position to be detected at any time by measuring techniques.

5. Device as claimed in claim 4, characterized in that the sensor element (35; 36) moves at a constant speed.

6. Device as claimed in claim 5, characterized in that an electronic differentiating member (40) is adapted to differentiate the light measurement signal with respect to time, which signal changes with the time in the course of the movement of the sensor element into the gingival pocket or out of it.

7. Device as claimed in claim 1, characterized in that the probe has a handle (9; 31) and that an actuating element (10) for initiating the measuring and storage process is attached to the handle.

8. Device as claimed in one of the preceeding claims, characterized in that an additional light source is provided for illuminating the tooth and the probe inserted into the gingival pocket.

9. Device as claimed in claim 8, characterized in that the light of the light source has a wave length which is tuned to the absorbing behaviour of the probe and/or the gingival tissue (blood).

## Revendications

1. Dispositif pour mesurer la profondeur des poches gingivales, en particulier pour établir un état de parodontose, comportant une sonde, en forme de tige, à introduire dans la poche gingivale, la longueur du tronçon de sonde obscurci par la gencive étant déterminée par détection de la lumière faisant incidence sur la sonde et étant enregistrée dans un dispositif électronique de traitement associé, caractérisé en ce que la sonde est réalisée en tant que canule (30) transparente, dans l'espace interne fermé de laquelle est agencé, de façon longitudinalement mobile, un élément détecteur (35;36) sensible à la lumière.

2. Dispositif selon la revendication 1, caractérisé en ce que l'élément détecteur est formé par l'extrémité libre (35a) d'un guide de lumière (35), qui, à l'autre extrémité, est relié à un détecteur (32) photosensible, le tronçon d'extrémité libre rentrant dans la canule (30).

3. Dispositif selon la revendication 1, caractérisé en ce que la canule (45) est opaque sur des tronçons déterminés (46) de sa longueur.

4. Dispositif selon la revendication 1, caractérisé en ce qu'il est prévu un dispositif d'entraînement (33) pour déplacer l'élément détecteur (35;36), lequel permet de détecter à tout moment, par une technique de mesure, la position de ce dernier.

5. Dispositif selon la revendication 4, caractérisé en ce que l'élément détecteur (35;36) se déplace à une vitesse constante.

6. Dispositif selon la revendication 5, caractérisé par un élément différentiateur électronique (40) pour différentier le signal de mesure lumineux, qui varie dans le temps au cours du mouvement de l'élément détecteur dans la poche gingivale ou hors de celle-ci.

7. Dispositif selon la revendication 1, caractérisé en ce que la sonde présente une poignée (9;31) et un organe d'actionnement (10) est agencé sur celle-ci pour déclencher le processus de mesure et de mémorisation.

8. Dispositif selon une des revendications précédentes, caractérisé en ce qu'une source de lumière supplémentaire pour éclairer la dent et la sonde insérée dans la poche gingivale est prévue.

9. Dispositif selon la revendication 8, caractérisé en ce que la lumière de ladite source présente une longueur d'onde adaptée à l'absorption de la sonde et/ou du tissu (sang).

FIG. 1

FIG.3

FIG.4

FIG.5

# FIG.2

33
31
34
32

# FIG.6

37
38

30
35
L
35a
36
30

31
30
39
40
41
44
42
43

# FIG.7

45
46
47

# FIG.8